# FASCICULE DE BREVET EUROPEEN

(11) **EP 4 344 181 B1**
(45) Date de publication et mention de la délivrance du brevet: **15.04.2026**
(21) Numéro de dépôt: 23195138.5
(22) Date de dépôt: 04.09.2023
(51) Int. Cl.: H04M 11/02, H04N 7/18

(54) **SYSTÈME DE CONTRÔLE D'ACCÈS**
ZUGANGSKONTROLLSYSTEM
ACCESS CONTROL SYSTEM

(30) Priorité: 21.09.2022 FR 2209535
(43) Date de publication de la demande: 27.03.2024
(73) Titulaire: Cogelec, 85290 Mortagne-sur-Sèvre (FR)
(72) Inventeur: LECLERC, Roger, 85130 LES LANDES GENUSSON (FR)
(74) Mandataire: INNOV-GROUP

(56) Documents cités:
- EP-A1- 3 147 872
- EP-A2- 1 806 703
- CN-A- 109 727 359
- KR-A- 20190 141 068
- US-A1- 2016 241 999
- US-B1- 11 436 882

## Description

L'invention concerne un système et un procédé de contrôle d'accès ainsi qu'un bandeau de porte pour ce système de contrôle d'accès.

La demande US10074224B2 décrit un système de contrôle d'accès comportant une serrure électronique montée sur une porte et intégrant :
- un clavier pour acquérir un code d'ouverture, et
- un interphone comportant une caméra, un microphone, un haut-parleur et un bouton d'appel pour établir une communication visiophonique avec un terminal distant.

Le terminal distant contacté par l'intermédiaire de l'interphone peut déclencher à distance le déverrouillage de la porte.

Avec ce système de contrôle d'accès, une personne qui connaît le code d'ouverture peut déclencher le déverrouillage de la porte en saisissant ce code d'ouverture à l'aide du clavier. Il est donc possible de déverrouiller la porte sans pour cela avoir à contacter le terminal distant.

Le système de la demande US10074224B2 est aussi avantageux en ce que si une personne n'arrive pas à déverrouiller la porte car elle ne connaît pas le bon code d'ouverture, alors elle peut toujours contacter le résident par l'intermédiaire de l'interphone pour que celui-ci lui ouvre la porte. Pour cela elle doit enfoncer la touche d'appel de l'interphone. L'interphone du système de la demande US10074224B2 permet d'établir une communication avec le résident même si celui-ci est à l'extérieur de son domicile. Ensuite, le résident peut commander le déverrouillage à distance de la porte et ainsi permettre à la personne présente devant la porte d'entrer. Ainsi, même lorsqu'elle n'a pas le bon code d'ouverture et même si le résident est à l'extérieur de son domicile, il est quand même possible d'autoriser une personne à entrer et cela tout en conservant un bon niveau de sécurité.

De l'état de la technique est également connu de : US11436882B1, CN109727359A, KR20190141068A, EP1806703A2 et EP3147872A1.
La demande US11436882B1 divulgue un système de contrôle d'accès basé sur de la reconnaissance faciale à partir des images filmées par une caméra. Les images ainsi filmées peuvent aussi être utilisées pour surveiller l'environnement extérieur et déclencher une alerte lorsqu'une personne non-autorisée à entrer est identifiée. Les demandes CN109727359A et KR20190141068A divulguent un système de contrôle d'accès similaire à celui de la demande US10074224B2. La demande EP1806703A2 divulgue un système de contrôle d'accès dans lequel, en cas de tentative d'accès par une personne non-autorisée, le résident est automatiquement et systématiquement contacté.

L'invention vise à proposer un système de contrôle d'accès qui conserve les avantages du système de contrôle d'accès de la demande US10074224B2 tout en étant plus simple à utiliser.

Elle a donc pour objet un système de contrôle d'accès conforme à la revendication 1.

Elle a également pour objet un bandeau de porte pour la réalisation de ce système de contrôle d'accès.

Elle a aussi pour objet un procédé de contrôle d'accès mis en œuvre dans ce système de contrôle d'accès.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un système de contrôle d'accès,
- la figure 2 est une illustration schématique de l'architecture d'un bandeau de porte du système de la figure 1 ;
- la figure 3 est un organigramme d'un procédé de contrôle d'accès mis en œuvre dans avec le système de la figure 1.

Dans ces figures, les mêmes références sont utilisées pour désigner les mêmes éléments. Dans la suite de cette description, les caractéristiques et fonctions bien connues de l'homme du métier ne sont pas décrites en détails.

Dans cette description des exemples détaillés de modes de réalisation sont d'abord décrits dans un chapitre I en référence aux figures. Ensuite, dans un chapitre II, des variantes de ces modes de réalisation sont introduits. Enfin, les avantages des différents modes de réalisation sont précisés dans un chapitre III.

### Chapitre I : Exemple de mode de réalisation

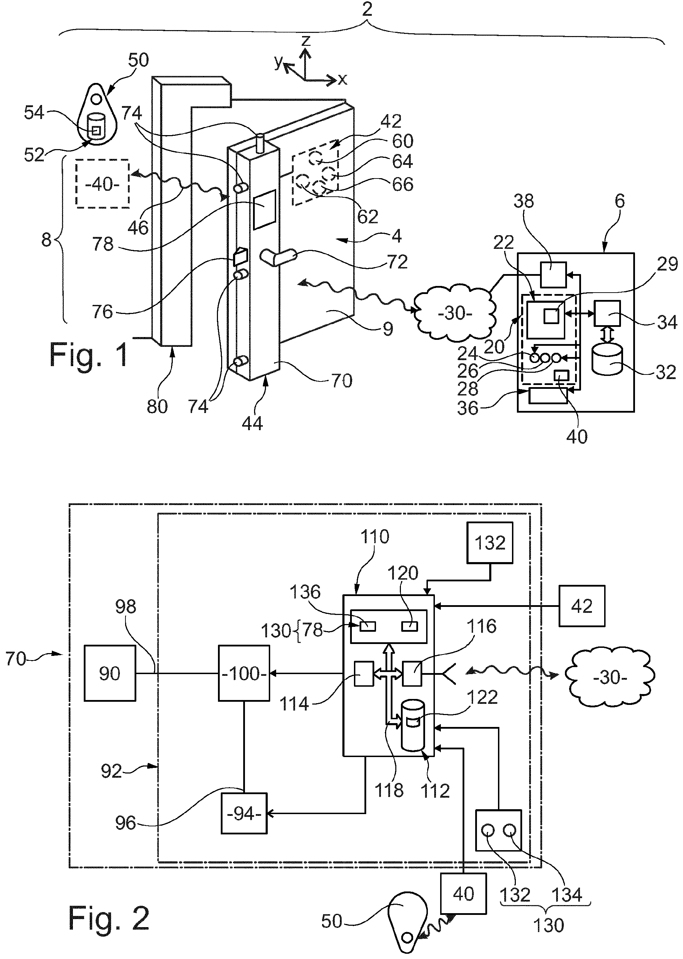

La figure 1 représente un système 2 de contrôle d'accès. Le système 2 est conçu pour contrôler les accès à un local. Par la suite, le système 2 est décrit dans le cas particulier où le local est le domicile d'un résident.

Le système 2 permet de s'assurer que chaque personne qui rentre à l'intérieur du domicile a bien été autorisée à cet effet. Pour cela le système 2 comporte :
- une porte 4 d'entrée,
- un terminal distant 6 destiné à être utilisé par le résident, et
- un dispositif 8 de contrôle d'accès.

La porte 4 est située à l'entrée du domicile du résident. Cette porte 4 délimite l'intérieur du domicile de l'extérieur du domicile. Ainsi, par la suite, les termes « intérieur » et « extérieur » désignent tout ce qui est situé, respectivement, à l'intérieur et à l'extérieur du domicile.

Par exemple, la porte 4 est une porte pallière d'un appartement ou d'une maison ou de tout autre logement. La porte 4 comporte une face intérieure 9 tournée vers l'intérieur du domicile et, du côté opposée, une face extérieure. Les faces intérieure et extérieure s'étendent principalement dans des plans verticaux parallèles. La porte 4 est déplaçable entre une position ouverte, représentée sur la figure 1, et une position fermée. Dans la position ouverte, une personne peut librement entrer à l'intérieur du domicile et donc se déplacer depuis l'extérieur vers l'intérieur. A l'inverse, dans la position fermée, la personne ne peut pas entrer à l'intérieur du domicile.

Dans la figure 1, le terminal 6 est situé à l'extérieur du domicile et peut être éloigné de plusieurs kilomètres du domicile. Par exemple, ici, le terminal 6 est un terminal mobile que le résident peut emporter avec lui lorsqu'il est à l'extérieur de son domicile.

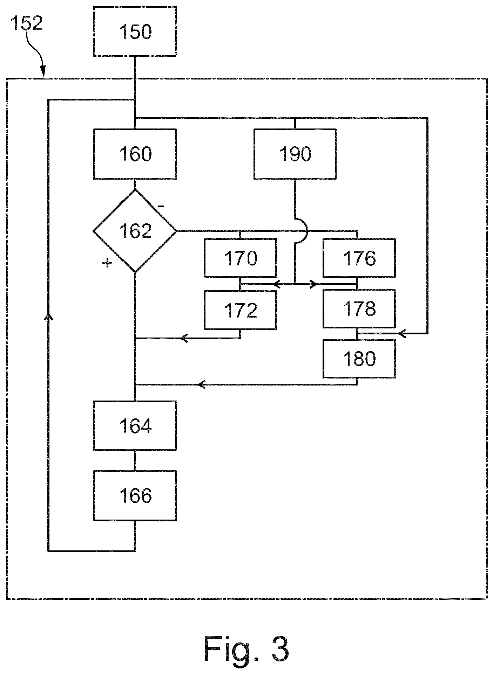

Le terminal 6 est capable d'établir une communication visiophonique. A cet effet, il comporte un équipement distant 20 d'interphonie. L'équipement 20 comprend : un écran 22, une caméra 24, un microphone 26, un haut parleur 28 et une touche 40 de déverrouillage. Il est également capable de mettre en œuvre le procédé de contrôle d'accès de la figure 3. En particulier, il est capable d'envoyer une commande de déverrouillage au dispositif 8 de contrôle d'accès par l'intermédiaire d'un réseau 30 grande distance de télécommunication en réponse à l'actionnement de la touche 40. Pour cela, il comporte en plus :
- une mémoire 32 comportant les données et les instructions nécessaires pour exécuter le procédé de la figure 3,
- un microprocesseur 34 apte à exécuter les instructions enregistrées dans la mémoire 32,
- une interface homme-machine 36, et
- un émetteur-récepteur 38.

L'émetteur-récepteur 38 raccorde le terminal 6 au dispositif 8 par l'intermédiaire du réseau 30. Le réseau 30 est, par exemple, un réseau de téléphonie sans-fil ou le réseau Internet.

Le terminal 6 est par exemple un smartphone ou un téléphone mobile.

Le dispositif 8 de contrôle d'accès comporte :
- un lecteur 40 de droits d'accès,
- un équipement extérieur 42 d'interphonie, et
- une serrure électronique 44.

Ici, la serrure électronique 44 est un bandeau électronique de porte. Ainsi, par la suite, la référence numérique 44 est aussi utilisée pour désigner ce bandeau de porte.

Le lecteur 40 et l'équipement 42 sont accessibles depuis l'extérieur du domicile. Pour illustrer cela, sur la figure 1, ils sont représentés en pointillés.

Par exemple, ici, le lecteur 40 est fixé, sans aucun degré de liberté, sur un mur extérieur du domicile situé à proximité de la porte 4. Le lecteur 40 est apte à acquérir les droits d'accès d'une personne située du côté extérieur de la porte 4 et à les transmettre au bandeau 44. A cet effet, le lecteur 40 est raccordé au bandeau 44 par l'intermédiaire d'une liaison sans fil 46 de transmission d'informations. La liaison 46 est par exemple une liaison entre le bandeau 44 et le lecteur 40 établit par l'intermédiaire d'un réseau local de transmission d'informations comme un réseau WiFi. La liaison 46 peut aussi être établie en utilisant d'autres standards de télécommunication comme, par exemple, par l'intermédiaire d'une liaison Bluetooth.

Dans ce mode de réalisation, le lecteur 40 est un lecteur de badges. Un exemplaire d'un tel badge lisible par le lecteur 40 est représenté sur la figure 1 et porte la référence numérique 50. Le badge 50 est un badge transportable, à la main, par un être humain. Le badge 50 comporte une mémoire 52 dans laquelle sont enregistrés des droits d'accès 54. Par exemple, ici, la mémoire 52 est la mémoire d'une radio-étiquette plus connue sous les termes anglais de « RFID tag » (« Radio Frequency Identification Tag ») ou « RFID transponder ». Dans ce cas, le lecteur 40 est capable de lire les droits d'accès 54 par l'intermédiaire d'une liaison radio courte distance. Typiquement, le lecteur 40 permet uniquement de lire les droits d'accès enregistrés dans un badge situé à moins de 10 m et, généralement, à moins de 1 m ou à moins de 50 cm du lecteur 40. De préférence, le badge 50 est un badge qui ne dispose pas de sa propre source d'alimentation. Le badge 50 est uniquement alimenté par le lecteur 40 lorsqu'il est à proximité de ce lecteur.

L'équipement 42 d'interphonie est fixé sur la face extérieure de la porte 4. Il permet d'établir une communication visiophonique avec une personne présente devant la porte du côté extérieur. L'équipement 42 comporte pour cela une caméra 60, un microphone 62, un haut-parleur 64 et une touche 66 d'appel. L'équipement 42 est raccordé au bandeau 44 par l'intermédiaire d'une liaison filaire ou sans-fil.

Ici, le bandeau 44 est un bandeau de porte multipoints. Le bandeau 44 est monté, sans aucun degré de liberté, sur la face intérieure 9 de la porte 4.

Le bandeau 44 se présente sous la forme d'une seule pièce à l'intérieure de laquelle sont logés les différents composants décrits en référence à la figure 2. A cet effet, le bandeau 44 se présente sous la forme d'un boîtier rigide 70 à l'intérieur duquel sont fixés ses différents composants. Le boîtier 70 est ici fixé le long de la tranche verticale de la porte 4 située du côté opposé aux gonds. Le boîtier 70 est fixé sur la face intérieure 9, par exemple, à l'aide de vis. Ainsi, avantageusement, le bandeau 44 peut être installé sur la face intérieure d'une porte préexistante.

Sur la figure 1, seules sont visibles les composants du bandeau 44 qui dépassent du boîtier 70 ou traverse ce boîtier 70. Ainsi, seuls les composants suivants du bandeau 44 sont visibles sur la figure 1 :
- une poignée 72,
- des pênes dormants 74,
- un pêne demi-tour 76, et
- un écran tactile 78 accessible par une personne située à l'intérieur du domicile.

Le pêne 76 est déplaçable par la poignée 72 depuis une position sortie (représentée sur la figure 1) jusqu'à une position rentrée. Dans la position sortie, le pêne 76 est reçu dans une cavité correspondante aménagée dans un châssis 80 fixé sans aucun degré de liberté sur le dormant de la porte 4. Ainsi, dans la position sortie, le pêne 76 maintient la porte 4 dans sa position fermée. Dans sa position rentrée, le pêne 76 est rétracté à l'intérieur du boîtier 70 et situé en dehors de la cavité aménagée dans le châssis 80. Lorsque le pêne 76 est dans sa position rentrée, la porte 4 peut être déplacée de sa position fermée vers sa position ouverte si celle-ci a, au préalable, été déverrouillée. Le pêne 76 est repoussé, en permanence, vers sa position sortie par un ressort de rappel. L'extrémité distale du pêne 76 est biseauté de sorte que lorsque la porte 4 est claquée de sa position ouverte vers sa position fermée, par coopération de forme entre l'extrémité biseautée et le châssis 80, le pêne 76 s'enfonce à l'intérieur du boîtier 70 à l'encontre de la force du ressort de rappel afin de permettre à la porte 4 d'atteindre sa position fermée. Une fois la position fermée atteinte, le ressort de rappel ramène automatiquement le pêne 76 dans sa position sortie ce qui bloque la porte 4 dans sa position fermée.

La poignée 72 est déplaçable à la main, par une personne située à l'intérieur du domicile, depuis une position de repos (représentée sur la figure 1) jusqu'à une position enfoncée. Pour cela, ici, la poignée 72 tourne autour d'un axe horizontal solidaire du boîtier 70. Typiquement, la poignée 72 est fixée à l'extrémité d'une tige qui se prolonge à l'intérieur du boîtier 70 pour entraîner le pêne 76 de sa position sortie vers sa position rentrée lorsque la poignée 72 est tournée de sa position de repos vers sa position enfoncée.

Chacun des pênes dormants 74 est déplaçable entre une position sortie et une position rentrée. Dans la position sortie, chaque pêne 74 est reçu dans une cavité correspondante aménagée dans le châssis 80 pour verrouiller la porte 4 dans sa position fermée. Dans sa position rentrée, chaque pêne 74 est rétracté à l'intérieur du boîtier 70 et situé en dehors de la cavité aménagée dans le châssis 80. Ainsi, lorsque tous les pênes 74 sont dans leur position rentrée, la porte 4 est déverrouillée et peut librement être déplacée de sa position fermée vers sa position ouverte après avoir enfoncé la poignée 72.

Sur la figure 1, quatre pênes dormants 74 sont représentés dans leur position sortie pour les rendre plus visibles même si la porte 4 est dans sa position ouverte. Par exemple, chaque pêne 74 est un barreau cylindrique déplaçable en translation entre ses positions sortie et rentrée. Contrairement au pêne 76, les extrémités distales des pênes 74 ne sont pas biseautées.

La figure 1 représente également un repère orthogonal XYZ. La direction Z de ce repère correspond à la verticale. Les directions X et Y sont horizontales. La direction X est parallèle au plan vertical dans lequel s'étend principalement la porte 4 lorsqu'elle est dans sa position fermée. La direction X est dirigée de la tranche de la porte le long de laquelle est fixé le bandeau 44, vers les gonds de cette porte. La direction Y est dirigée de l'intérieur du domicile vers l'extérieur du domicile.

La figure 2 représente schématiquement l'architecture intérieur du bandeau 44.

Le bandeau 44 comporte un mécanisme 90 à pêne et un système 92 d'actionnement du mécanisme 90.

Le mécanisme 90 comprend les pênes 74 ainsi que la tringlerie nécessaire pour les déplacer entre leurs positions sortie et rentrée. Par contre, dans ce mode de réalisation, le mécanisme 90 ne comporte pas le pêne 76.

Le système 92 d'actionnement déplace le mécanisme 90 depuis un état saillant vers un état escamoté et vice versa. Dans l'état saillant, au moins un pêne 74 est dans sa position sortie. Ici, dans l'état saillant, tous les pênes 74 sont dans leur position sortie. Dans l'état escamoté, tous les pênes 74 sont dans leur position rentrée. A cet effet, par exemple, le système 92 comporte une roue dentée engrenée avec une crémaillère du mécanisme 90 à pêne. Lorsque cette roue dentée tourne, dans un premier sens, cela déplace le mécanisme 90 de son état saillant vers son état escamoté. Lorsque cette même roue dentée tourne en sens inverse, cela déplace le mécanisme 90 de l'état escamoté vers son état saillant. Dans ce mode de réalisation, le système 92 ne permet pas de déplacer le pêne 76. Le pêne 76 est seulement déplaçable à l'aide de la poignée 72.

Pour déplacer le mécanisme 90 entre ses états saillant et escamoté, le système 92 comporte un moteur électrique 94.

Le moteur 94 comporte un arbre 96 d'entraînement. Lorsque le moteur 94 est commandé pour déplacer le mécanisme 90 vers son état escamoté, c'est la rotation de l'arbre 96 qui actionne le déplacement du mécanisme 90.

Le système 92 comporte un arbre 98 de sortie et un mécanisme 100 de couplage mécanique de l'arbre 96 à cet arbre 98 pour l'entraîner en rotation. L'arbre 98 déplace le mécanisme 90 de son état saillant vers son état escamoté lorsqu'il est tourné dans un sens et de son état escamoté vers son état saillant lorsqu'il est tourné en sens inverse.

Pour commander le moteur 94, le système 92 comporte une unité 110 de commande. Cette unité 110 est configurée pour mettre en œuvre le procédé de la figure 3. A cet effet, l'unité 110 comporte :
- une mémoire 112,
- un microprocesseur 114 programmable,
- un émetteur-récepteur 116,
- l'écran tactile 78,
- une touche 120 d'ouverture, et
- un bus 118 de transmission d'informations qui raccorde entre eux les différents composants de l'unité 110.

La mémoire 112 est une mémoire non volatile comportant les instructions à exécuter par le microprocesseur 114. La mémoire 112 comporte l'ensemble des instructions et des données nécessaires pour exécuter les différentes fonctions décrites dans ce texte. En particulier, ici, elle comporte les instructions d'un module logiciel 122 de contrôle d'accès.

L'émetteur-récepteur 116 est apte à établir une liaison sans fil de communication avec le terminal 6 par l'intermédiaire du réseau 30.

La touche 120 est ici une touche formée sur l'écran tactile 78. Lorsque la touche 120 est actionnée par une personne située à l'intérieur du domicile, cela provoque automatiquement le déverrouillage de la porte 4.

Ici, le système 92 comporte un équipement intérieur 130 d'interphonie pour établir une communication visiophonique. L'équipement 130 est utilisable par une personne située à l'intérieur du domicile afin d'établir une communication visiophonique avec une personne située devant la porte 4. Cet équipement 130 comporte un microphone 132, un haut-parleur 134, l'écran 78 et une touche 136 de dialogue. Le microphone 132 et le haut-parleur 134 sont raccordés à l'unité 110. Dans ce mode de réalisation, la touche 136 est une touche affichée sur l'écran tactile 78. Lorsqu'elle est actionnée, elle déclenche l'établissement d'une communication visiophonique avec la personne située à l'extérieur et devant la porte 4.

Ici, l'unité 110 est aussi capable de commander le moteur 94 pour faire tourner l'arbre 96 en sens inverse et ainsi ramener le mécanisme 90 dans son état saillant. Par exemple, après une durée prédéterminée écoulée après que la porte 4 est dans sa position fermée, l'unité 110 commande automatiquement le moteur 94 pour ramener le mécanisme 90 dans son état saillant. Pour savoir si la porte 4 est dans sa position fermée, le bandeau 44 comporte un capteur 132 d'ouverture/fermeture de la porte 4 raccordé à l'unité 110 de commande.

D'autres fonctionnalités de l'unité 110 sont décrites plus loin.

Le fonctionnement du système 2 va maintenant être décrit en se référant à la figure 3.

Lors d'une phase 150 de configuration, les différentes conditions d'accès qui autorisent le déverrouillage de la porte 4 sont pré-enregistrées dans la mémoire 112. Par exemple, lors de cette phase 150, les conditions d'accès autorisant le badge 50 à déverrouiller la porte 4 sont enregistrées dans la mémoire 112. Ici, une première condition d'accès est que l'identifiant unique du badge 50 contenu dans les droits d'accès 54 appartienne à une liste d'identifiants de badges autorisés à déverrouiller la porte 4. Cette liste est appelée « liste blanche ». De plus, dans le cas du badge 50, une seconde condition d'accès est que ce badge 50 soit utilisé à l'intérieur d'une plage horaire où il est autorisé à déverrouiller la porte 4. En dehors de cette plage horaire, le badge 50 n'est pas autorisé à déverrouiller la porte 4. Les informations nécessaires à l'établissement d'une liaison avec le terminal 6 à travers le réseau 30 sont également enregistrées dans la mémoire 112.

Une fois la phase 150 de configuration terminée, une phase 152 d'utilisation du système 2 est exécutée.

Une personne présente le badge 50 devant le lecteur 40. En réponse, lors d'une étape 160, le lecteur 40 acquière les droits d'accès 54 et les transmet à l'unité 110 de commande.

Lors d'une étape 162, le module 122 de contrôle d'accès détermine alors si les droits d'accès 54 satisfont toutes les conditions d'accès pré-enregistrées dans la mémoire 112.

Par exemple, le module 122 vérifie que l'identifiant du badge 50 appartient bien à la liste blanche et que la date et l'heure courantes sont bien situées à l'intérieur de la plage horaire autorisée.

Dans l'affirmative, le procédé se poursuit immédiatement par une étape 164 lors de laquelle l'unité 110 envoie une commande de déverrouillage au moteur 94.

En réponse à la commande de déverrouillage, lors d'une étape 166, le moteur 94 déplace le mécanisme 90 de son état saillant vers son état escamoté.

La porte 4 peut alors être déplacée de sa position fermée vers sa position ouverte par la personne qui a présenté le badge 50 devant le lecteur 40.

Si lors de l'étape 162, le module 122 détermine que au moins l'une des conditions d'accès n'est pas satisfaite par les droits d'accès acquis, alors il procède immédiatement à une étape 170 d'établissement automatique d'une communication visiophonique avec le terminal 6 du résident. En particulier, il est procédé à l'étape 170 sans qu'il soit nécessaire d'actionner la touche 66 d'appel.

Par exemple, il est procédé à l'étape 170 lorsque le badge 50 est présentée devant le lecteur 50 en dehors de la plage horaire autorisée. Il est également procédé à l'étape 170 lorsqu'un badge dépourvu de droits d'accès est présenté devant le lecteur 40. Par exemple, le badge dépourvu de droits d'accès est un badge qui n'a pas encore été configuré, tel qu'un badge vierge, ou un badge qui est autorisé à déverrouiller d'autres portes mais pas la porte 4.

Lors de l'étape 170 les images filmées par la caméra 60 et les sons acquis par le microphone 62 sont acquis par l'unité 110 puis transmis au terminal 6 par l'intermédiaire du réseau 30. Le terminal 6 affiche les images transmises sur son écran 22 et joue les sons reçus à l'aide du haut-parleur 28. En même temps, les sons acquis par le microphone 26 du terminal 6 sont transmis à l'unité 110 par l'intermédiaire du réseau 30 puis joués par le haut-parleur 64 de l'équipement extérieur 42. Ainsi, le résident peut voir la personne qui a tenté de déverrouiller la porte 4 alors qu'elle ne dispose pas des droits d'accès nécessaires. Le résident peut également dialoguer avec cette personne pour déterminer s'il doit ou non l'autoriser à déverrouiller la porte 4.

Si après avoir dialogué avec la personne présente devant la porte 4, le résident décide de l'autoriser à rentrer, il actionne la touche 40 de déverrouillage.

En réponse, lors d'une étape 172, le terminal 6 transmet une commande de déverrouillage à l'unité 110 par l'intermédiaire du réseau 30.

Ensuite, le procédé se poursuit par l'étape 164.

A l'inverse, si le résident décide de ne pas autoriser la personne à rentrer, alors il n'actionne pas la touche 40 et aucune commande de déverrouillage n'est transmise par le terminal 6 à l'unité 110 de commande. Le mécanisme 90 à pêne reste donc dans ce cas dans l'état saillant et la porte 4 reste verrouillée.

Ici, en parallèle de l'étape 172, en réponse au fait qu'au moins l'une des conditions d'accès n'est pas satisfaite par les droits d'accès acquis, lors d'une étape 176, l'unité 110 déclenche automatiquement l'affichage des images filmées par la caméra 60 sur l'écran 78.

Si le résident est à l'intérieur de son domicile, il peut alors voir la personne qui a tenté de déverrouiller la porte 4 sans pour cela utiliser son terminal 6.

S'il souhaite dialoguer avec cette personne, il actionne la touche 136.

En réponse, lors d'une étape 178, l'unité 110 établit alors immédiatement une communication visiophonique entre le résident situé à l'intérieur du domicile et la personne située à l'extérieur par l'intermédiaire des équipements 42 et 130. Cette étape 178 est identique à l'étape 170 sauf que les images filmées par la caméra 60 et les sons acquis par le microphone 62 sont restitués, respectivement, sur l'écran 78 et par le haut-parleur 134. En même temps, les sons acquis par le microphone 132 sont joués par le haut-parleur 64 de l'équipement extérieur 42.

Si suite à ce dialogue, le résident souhaite laisser entrée la personne située à l'extérieure, il actionne la touche 120 d'ouverture.

En réponse, lors d'une étape 180, l'unité 110 détecte l'actionnement de la touche 120 et procède alors à l'étape 164 de déverrouillage de la porte 4.

Bien sûr, la touche 120 d'ouverture peut être actionnée à tout moment par une personne située à l'intérieur du domicile pour déclencher le déverrouillage de la porte 4. L'unité 110 peut donc procéder directement à l'étape 180 sans exécuter au préalable les étapes 160, 162, 176 et 178.

Une personne située à l'extérieur peut aussi appuyer sur la touche 66 d'appel. En réponse, lors d'une étape 190, l'unité 110 détecte que la touche 66 d'appel a été actionnée. Ensuite, l'unité 110 procède directement à l'étape 178 et/ou à l'étape 170 pour établir un dialogue entre le résident et la personne qui a actionné la touche 66. Ainsi, que ce soit en réponse à l'enfoncement de la touche 66 ou en réponse à la présentation, devant le lecteur 40, de droits d'accès qui ne satisfont pas toutes les conditions d'accès pré-enregistrées, c'est la même étape 170 et, si nécessaire, la même étape 172 qui sont exécutées. Dans ces conditions, les liaisons visiophoniques établies en réponse à l'enfoncement de la touche 66 et en réponse à la présentation de droits d'accès non-autorisés, sont fonctionnellement identiques et équivalentes. En particulier, que l'établissement de la liaison visiophonique ait été déclenché par l'enfoncement du bouton 66 ou par la présentation de droits d'accès non-autorisés, le propriétaire du terminal 6 peut discuter avec la personne présente devant la porte en utilisant le même équipement extérieur 42 et peut envoyer la commande de déverrouillage en utilisant la même touche de déverrouillage de son terminal 6.

### Chapitre II :Variantes :

### Variantes du lecteur de droits d'accès :

D'autres modes de réalisation du lecteur de droits d'accès sont possibles. Par exemple, le lecteur 40 peut être remplacé par un lecteur de cartes magnétiques. Dans ce cas, les badges se présentent sous la forme de cartes magnétiques. Le lecteur 40 peut aussi être remplacé par un émetteur-récepteur en champ proche capable d'établir une liaison sans fil courte distance directement avec un terminal mobile tel qu'un smartphone. Un tel émetteur-récepteur est connu sous le nom de « émetteur-récepteur NFC (« near-field communication »). Dans ce cas, le badge se présente, par exemple, sous la forme d'un smartphone dans la mémoire duquel les droits d'accès sont enregistrés. Les droits d'accès enregistrés dans le smartphone sont, par exemple, les mêmes que ceux précédemment décrits.

Le lecteur de droits d'accès peut aussi fonctionner sans badge. Par exemple, le lecteur peut aussi être remplacé par un clavier qui permet à la personne présente devant la porte de saisir un code d'accès. Dans ce cas, les conditions d'accès comportent un code d'accès pré-enregistré.

Dans un mode de réalisation préféré, le lecteur 40 est fixé sur la face extérieur de la porte 4. Lorsque le lecteur 40 acquière les droits d'accès par l'intermédiaire d'une liaison sans-fil de transmission d'informations, il peut aussi être logé à l'intérieur du boîtier 70 du bandeau 44. Lorsque le lecteur 40 est fixé sur la porte 4 ou intégré dans le bandeau 44, la liaison 46 peut être une liaison filaire.

### Variantes de l'équipement extérieur d'interphonie :

En variante, l'équipement extérieur 42 d'interphonie comporte en plus un écran et le terminal 6 comporte une caméra. Dans ce cas, lors de la communication visiophonique, les images du résident filmée par la caméra de son terminal 6 sont affichées sur l'écran de l'équipement extérieur 42.

Dans un mode de réalisation simplifiée, la caméra 60 de l'équipement 42 est omise. Dans ce cas, la communication entre le résident et la personne devant la porte est uniquement verbale. Une telle communication verbale est appelée « communication audiophonique » dans ce texte. Il est souligné qu'une communication visiophonique, c'est-à-dire une communication lors de laquelle en plus des images sont échangées, est aussi une communication audiophonique car elle permet aussi une communication verbale.

Dans un autre mode de réalisation, la communication avec le terminal 6 est déclenchée par d'autres moyens que l'actionnement de la touche 66 d'appel. Par exemple, le dispositif de contrôle d'accès comporte un capteur de présence apte à détecter la présence d'une personne du côté extérieur de la porte. Dans ce cas, l'établissement de la communication avec le terminal 6 est automatiquement déclenchée dès que ce capteur détecte la présence d'une personne.

En variante, la touche 66 d'appel de l'équipement extérieur 42 d'interphonie est omise. Dans ce cas, par exemple, l'établissement de la communication avec le terminal 6 peut seulement être déclenchée en présentant des droits d'accès non-autorisés devant le lecteur 40.

Dans un autre mode de réalisation, l'équipement extérieur 42 n'est pas fixé sur la face extérieure de la porte 4. Par exemple, l'équipement 42 est fixé sur le dormant ou sur un mur proche de la porte 4.

### Variantes du bandeau de porte :

Dans un mode de réalisation particulier, l'unité 110 de commande est en totalité ou en partie déportée dans un serveur raccordé au dispositif de contrôle d'accès par l'intermédiaire du réseau 30.

Le bandeau électronique de porte peut comporter des composants supplémentaires. Par exemple, le bandeau comporte un cylindre mécanique de serrure qui permet de déplacer le mécanisme 90 de son état saillant vers son état rétractée en cas d'indisponibilité du moteur 94. Une telle indisponibilité peut résulter d'une panne du moteur 94 ou d'un autre élément du système 92 d'actionnement. Cette indisponibilité peut aussi résulter, par exemple, d'une coupure de l'alimentation électrique du moteur 94. L'incorporation d'un tel cylindre mécanique dans un bandeau de porte est décrite en détail dans la demande de brevet français déposée sous le numéro FR2203726 le 21/04/2022 par la société COGELEC.

L'équipement intérieur 130 d'interphonie peut en plus comporter une caméra pour filmer la personne située à l'intérieur lorsqu'elle parle dans le microphone 132. Dans ce cas, l'équipement extérieur 40 d'interphonie est aussi équipé d'un écran pour afficher les images filmées par la caméra de l'équipement 130.

Dans un mode de réalisation particulier, si une personne située à l'intérieur du logement actionne la touche 136 alors que la personne située à l'extérieur est déjà en train de dialoguer avec l'utilisateur du terminal 6, alors une conversation à trois s'établit. Au cours de cette conversation à trois, la personne à l'extérieur, la personne à l'intérieur et l'utilisateur du terminal 6 peuvent dialoguer ensemble par l'intermédiaire des équipements 20, 42 et 130.

Dans une variante simplifiée, l'acquisition de droits d'accès non-autorisés ne déclenche pas l'affichage des images filmées par la caméra 60 sur l'écran intérieur 78.

D'autres conditions d'accès peuvent être enregistrées dans la mémoire 112. Par exemple, les conditions d'accès peuvent comporter une liste noire contenant les identifiants des badges pour lesquels le déverrouillage de la porte 4 est systématiquement interdit. Les conditions d'accès peuvent aussi comporter une condition selon laquelle l'authentification des droits d'accès transmis est réussie avec succès. Typiquement, dans ce cas, les droits d'accès comportent une signature numérique et/ou un certificat cryptographique dont l'authenticité peut être vérifiée par le module 122 de contrôle d'accès.

Dans une autre variante, l'équipement intérieur 130 d'interphonie est omis. Dans ce cas, le dialogue avec un personne située à l'extérieur par l'intermédiaire des équipements 42 et 130 d'interphonie n'est plus possible. Pour établir un telle dialogue, la personne située à l'intérieur du local doit alors utiliser le même terminal 6 que celui utilisé à distance.

Dans un autre mode de réalisation, la serrure électronique du dispositif de contrôle d'accès n'est pas un bandeau de porte fixé sur la face intérieure 9 de la porte 4. Dans ce cas, par exemple, la serrure électronique est directement intégrée dans la tranche verticale de la porte 4. L'unité 110 de commande est alors, par exemple, située à l'intérieur du local et n'est pas fixée sur la porte. Typiquement, l'unité 110 de commande est alors reliée à la serrure électronique par l'intermédiaire d'une liaison sans-fil de transmission d'informations. La touche 120 d'ouverture est quand à elle fixée sur la porte 4 où sur un mur intérieur situé à proximité de la porte 4.

La touche 120 d'ouverture peut aussi être logée dans une télécommande que l'utilisateur peut ou non fixer sur un mur.

### Autres variantes :

Quelle que soit la touche du système 2, celle-ci peut être implémentée sous la forme d'un bouton mécanique et non pas sous la forme d'une touche affichée sur un écran tactile. Chaque touche peut également être implémentée sous forme d'une commande vocale. Par exemple, dans le cas des touches 120 et 136, les commandes vocales sont acquises, par exemple, par le microphone 132. Ainsi, à titre d'illustration, la commande vocale « Déverrouiller la porte » déclenche le déverrouillage de la porte 4 et la commande vocale « Dialoguer » déclenche l'établissement de la communication visiophonique avec la personne à l'extérieur. Quel que soit le mode d'implémentation choisi pour une touche, dans ce texte, celui-ci est couvert par le terme « touche ».

Le terminal distant 6 n'est pas nécessairement un terminal distant comme un smartphone. Par exemple, si la gestion des accès au local a été déléguée à un centre de surveillance, le terminal distant peut être un ordinateur fixe ou portable situé à l'intérieur de ce centre de surveillance.

Dans un mode de réalisation simplifié, le terminal 6 ne comporte pas la caméra 24.

Le local peut être un maison, un appartement dans un immeuble, un bureau où tout autre pièce dont l'accès doit être protégé.

D'autres modes de réalisation de l'étape 162 sont possibles. Ainsi, dans un mode de réalisation particulier, à l'issue de l'étape 162, l'unité 110 procède à l'étape 170 sans qu'il soit nécessaire d'actionner la touche 66 uniquement si les droits d'accès acquis satisfont la première condition et pas la seconde condition. Autrement dit, l'étape 170 est automatiquement déclenchée uniquement dans le cas où les droits d'accès acquis identifient un badge qui appartient à la liste blanche et que ce badge est présenté en dehors d'une plage horaire autorisée. Dans le cas inverse où les droits d'accès acquis ne permettent pas d'identifier un badge autorisé à déverrouiller la serrure, le déclenchement automatique de l'étape 170 est inhibé de sorte que la personne qui a présenté ce badge doit utiliser la touche 66 pour appeler le résident.

Lorsque la touche 66 d'appel est actionnée, en variante, l'unité 110 exécute soit seulement l'étape 170 soit seulement l'étape 176. Le choix de l'étape à exécuter est par exemple pré-configuré dans l'unité 110 lors de la phase 150 de configuration.

L'étape 176 peut être mise en œuvre indépendamment du fait que l'étape 170 est automatiquement déclenchée lorsque les droits d'accès acquis ne satisfont pas les conditions d'accès requises pour autoriser le déplacement de la serrure électronique dans son état déverrouillé. Dans ce cas, lorsque les droits d'accès acquis ne satisfont pas les conditions d'accès requises, l'étape 176 est exécutée alors que, par exemple, l'étape 170 ne l'est pas.

Plusieurs des variantes décrites ci-dessus peuvent être combinées dans un même mode de réalisation.

### Chapitre III : Avantages des modes de réalisation décrits :

Le même lecteur 40 est utilisé pour remplir deux fonctions différentes, à savoir la fonction d'acquisition des droits d'accès et la fonction de touche d'appel du terminal distant. Cela simplifie l'architecture du système de contrôle d'accès. Cela simplifie aussi son utilisation lorsque des droits d'accès non-autorisés sont acquis car, dans ce cas, l'établissement de la communication avec le terminal 6 est automatique. Ainsi, la personne qui a présenté les droits d'accès non-autorisés n'a pas besoin, en plus, d'actionner la touche 66 d'appel pour établir cette communication avec le terminal distant.

Le fait que des images de la personne qui a présenté des droits d'accès non-autorisés soient transmises au terminal 6 permet d'accroître la sécurité du système. En effet, le résident a alors la possibilité de reconnaître visuellement cette personne. Cela limite la probabilité que le résident autorise, par erreur, cette personne à entrer.

Le fait d'inhiber l'établissement automatiquement la communication avec le terminal distant lorsque les droits d'accès présentés ne correspondent pas à des droits d'accès autorisés, au moins dans certaines plages horaires, à déverrouiller la serrure, permet d'éviter l'établissement automatique de cette communication par erreur. Par exemple, cela permet d'éviter l'établissement automatique de cette communication lorsqu'une personne, autorisée à déverrouiller la serrure de la porte voisine, se trompe et présente son badge devant une autre porte. Autrement dit, lorsqu'une personne n'est jamais autorisée à entrer dans un appartement, si elle souhaite entrer dans cet appartement, elle doit, par exemple, utiliser le bouton d'appel. A l'inverse, une personne qui peut entrer dans l'appartement mais pas dans cette plage horaire, n'a pas à utiliser le bouton d'appel pour communiquer avec le résident. En effet, contrairement au premier cas, cette personne est nécessairement déjà connue du résident de sorte qu'il est intéressant de lui faciliter l'accès à l'appartement même en dehors des plages horaires prévues.

Le fait que les pênes, l'unité de commande et la touche d'ouverture soient tous intégrés dans un même bandeau de porte, simplifie l'installation du système de contrôle d'accès. En effet, dans ce cas, l'installateur n'a pas à se soucier de comment il va faire pour interfacer le mécanisme 90 à pêne, l'unité de commande et la touche d'ouverture. Tout est pré-raccordé à l'intérieur du même bandeau électronique de porte.

Le fait de déclencher automatiquement l'affichage des images filmées par la caméra 60 sur l'écran intérieur 78 dès que des droits d'accès non-autorisés sont acquis, permet d'alerter simplement une personne située à l'intérieur du local sur le fait que quelqu'un cherche à rentrer. Dans ce cas, le même lecteur 40 remplit en plus la fonction de détection de tentative d'entrée.

L'intégration de l'équipement intérieur 130 d'interphonie dans le bandeau de porte permet, à une personne située à l'intérieur du local, d'établir la communication visiophonique avec la personne qui a présenté les droits d'accès non-autorisés sans pour cela utiliser le terminal distant.

## Revendications

1. Système de contrôle d'accès comportant :
- une porte (4) d'entrée située à l'entrée d'un local, cette porte d'entrée étant déplaçable entre une position fermée où elle interdit l'accès à l'intérieur de ce local et une position ouverte où elle autorise l'accès à l'intérieur de ce local,
- un dispositif électronique de contrôle d'accès solidaire de la porte d'entrée ou du dormant de la porte d'entrée, ce dispositif électronique de contrôle d'accès comportant :
- une serrure électronique apte à se déplacer, en réponse à la réception d'une commande de déverrouillage, :
- depuis un état verrouillé dans lequel elle verrouille la porte d'entrée dans une position fermée, vers
- un état déverrouillé dans lequel la porte d'entrée peut librement être déplacée de sa position fermée vers une position ouverte,
- un lecteur (40) de droits d'accès apte à acquérir les droits d'accès d'une personne présente devant la porte d'entrée, ce lecteur (40) de droits d'accès étant un lecteur de badges apte à acquérir les droits d'accès enregistrés dans un badge seulement lorsque ce badge est situé à moins de 10 m du lecteur de badges ou un clavier qui permet à la personne présente devant la porte de saisir un code d'accès, et
- un équipement extérieur (42) d'interphonie apte à établir une communication audiophonique au cours de laquelle la commande de déverrouillage peut être envoyée à la serrure électronique, cet équipement extérieur d'interphonie comportant à cet effet un microphone (62) et un haut-parleur (64),
- un terminal distant (6) apte à établir, avec l'équipement extérieur d'interphonie, la communication audiophonique par l'intermédiaire d'un réseau grande distance de télécommunication, ce terminal distant comportant à cet effet un équipement distant (20) d'interphonie comportant un microphone (26), un haut-parleur (28) et une touche (40) de déverrouillage apte, lorsqu'elle est actionnée par un utilisateur du terminal distant, à déclencher l'envoi de la commande de déverrouillage à la serrure électronique par l'intermédiaire du réseau grande distance de télécommunication,
- une unité (110) de commande configurée pour exécuter les opérations suivantes :
- déterminer si les droits d'accès acquis par le lecteur (40) satisfont des conditions d'accès pré-enregistrées, ces conditions d'accès pré-enregistrées comportant une première condition d'accès qui permet d'identifier des droits d'accès autorisés à déclencher le déplacement de la serrure électronique de son état verrouillé vers son état déverrouillé sans faire intervenir le terminal distant, et
- si ces droits d'accès acquis satisfont ces conditions d'accès pré-enregistrées, en réponse, commander automatiquement le déplacement de la serrure électronique de son état verrouillé vers son état déverrouillé sans faire intervenir le terminal distant,
**caractérisé en ce que** :
- les conditions d'accès pré-enregistrées comportent une seconde condition d'accès qui limite la plage horaire à l'intérieur de laquelle des droits d'accès autorisés peuvent être utilisés pour déclencher le déplacement de la serrure électronique de son état verrouillé vers son état déverrouillé sans faire intervenir le terminal distant, et
- l'unité (110) de commande est également configurée pour exécuter les opérations suivantes :
- si les droits d'accès acquis par le lecteur de badges ou le clavier satisfont la première condition d'accès et ne satisfont pas la seconde condition d'accès, en réponse, déclencher automatiquement l'établissement de la communication audiophonique avec le terminal distant, et
- si les droits d'accès acquis par le lecteur de badges ou le clavier ne satisfont pas la première condition d'accès, en réponse, inhiber le déclenchement automatiquement de l'établissement de la communication audiophonique avec le terminal distant.

2. Système selon la revendication 1, dans lequel :
- l'équipement extérieur (42) d'interphonie comporte une caméra (60),
- le terminal distant comporte un écran (22), et
- la communication établie avec le terminal distant en réponse à l'acquisition, par le lecteur, de droits d'accès qui ne satisfont pas les conditions d'accès, est une communication visiophonique lors de laquelle les images filmées par la caméra (60) de l'équipement extérieur d'interphonie sont affichées sur l'écran du terminal distant et au cours de laquelle la commande de déverrouillage peut être envoyée à la serrure électronique.

3. Système selon l'une quelconque des revendications précédentes, dans lequel l'équipement extérieur (42) comporte une touche (66) d'appel, cette touche d'appel déclenchant automatiquement l'établissement de la communication audiophonique avec le terminal distant lorsqu'elle est actionnée par la personne présente devant la porte d'entrée.

4. Système selon l'une quelconque des revendications précédentes, dans lequel la serrure électronique est un bandeau électronique (44) de porte fixé sur une face intérieure (9) de la porte et ce bandeau électronique de porte se présentant sous la forme d'une seule pièce comportant l'ensemble des composants suivants :
- au moins un pêne (74) déplaçable entre une position sortie dans laquelle il coopère avec un logement solidaire du dormant de la porte pour verrouiller cette porte dans sa position fermée, et une position rentrée dans laquelle il autorise le déplacement de la porte de sa position fermée vers sa position ouverte,
- l'unité (110) de commande,
- une touche (120) d'ouverture apte à être actionnée par une personne située à l'intérieur du local pour déclencher le déplacement dudit au moins un pêne de sa position sortie vers sa position rentrée, et
- les raccordements entre tous les composants du bandeau électronique de porte.

5. Système selon les revendications 2 et 4 prises ensemble, dans lequel :
- le bandeau électronique de porte comporte en plus le composant suivant : un écran intérieur (78) apte à afficher les images filmées par la caméra de l'équipement extérieur (42) d'interphonie, et
- l'unité (110) de commande est également configurée pour exécuter l'opération suivante : si les droits d'accès acquis par le lecteur ne satisfont pas les conditions d'accès pré-enregistrées, en réponse, déclencher automatiquement l'affichage des images filmées par la caméra (60) de l'équipement extérieur d'interphonie sur l'écran intérieur.

6. Système selon la revendication 5, dans lequel :
- le bandeau électronique de porte comporte en plus le composant suivant : un équipement intérieur (130) d'interphonie comportant : un microphone (132), un haut-parleur (134), une touche (136) de dialogue accessible par une personne située du côté intérieur de la porte, et l'écran intérieur (78) apte à afficher les images filmées par la caméra (60) de l'équipement extérieur d'interphonie, et
- l'unité (110) de commande est configurée pour établir une communication visiophonique entre une personne située du côté extérieur de la porte et une personne située à l'intérieur du local par l'intermédiaire des équipements extérieur (42) et intérieur (130) d'interphonie en réponse à l'actionnement de la touche (136) de dialogue.

7. Système selon l'une quelconque des revendications 4 à 6, dans lequel le bandeau de porte comporte plusieurs desdits pênes (74) déplaçables entre une position sortie et une position rentrée.

8. Système selon l'une quelconque des revendications précédentes, dans lequel le lecteur (40) de droits d'accès est un lecteur de badges apte à acquérir les droits d'accès enregistrés dans un badge seulement lorsque ce badge est situé à moins de 1 m du lecteur de badges.

9. Bandeau électronique de porte pour la réalisation d'un système conforme à l'une quelconque des revendications 4 à 7, dans lequel ce bandeau électronique de porte est apte à être fixé sur une face intérieure de la porte et ce bandeau électronique de porte se présentant sous la forme d'une seule pièce comportant l'ensemble des composants suivants :
- au moins un pêne (74) déplaçable entre une position sortie dans laquelle il coopère avec un logement solidaire du dormant de la porte pour verrouiller cette porte dans sa position fermée, et une position rentrée dans laquelle il autorise le déplacement de la porte de sa position fermée vers sa position ouverte,
- une unité (110) de commande configurée pour exécuter les opérations suivantes :
- déterminer si les droits d'accès acquis par le lecteur de badges ou le clavier satisfont des conditions d'accès pré-enregistrées, ces conditions d'accès pré-enregistrées comportant une première condition d'accès qui permet d'identifier des droits d'accès autorisés à déclencher le déplacement dudit au moins un pêne de sa position sortie vers sa position rentrée sans faire intervenir le terminal distant, et
- si ces droits d'accès acquis satisfont ces conditions d'accès pré-enregistrées, en réponse, commander automatiquement le déplacement dudit au moins un pêne de sa position sortie vers sa position rentrée,
- une touche (120) d'ouverture apte à être actionnée par une personne située à l'intérieur du local pour déclencher le déplacement dudit au moins un pêne de sa position sortie vers sa position rentrée, et
- les raccordements entre tous les composants du bandeau électronique de porte,
**caractérisé en ce que** :
- les conditions d'accès pré-enregistrées comportent une seconde condition d'accès qui limite la plage horaire à l'intérieur de laquelle des droits d'accès autorisés peuvent être utilisés pour déclencher le déplacement dudit au moins un pêne de sa position sortie vers sa position rentrée sans faire intervenir le terminal distant, et
- l'unité (110) de commande est également configurée pour exécuter les opérations suivantes :
- si les droits d'accès acquis par le lecteur de badges ou le clavier satisfont la première condition d'accès et ne satisfont pas la seconde condition d'accès, en réponse, déclencher automatiquement l'établissement de la communication audiophonique avec le terminal distant, et
- si les droits d'accès acquis par le lecteur de badges ou le clavier ne satisfont pas la première condition d'accès, en réponse, inhiber le déclenchement automatiquement de l'établissement de la communication audiophonique avec le terminal distant.

10. Procédé de contrôle d'accès mis en œuvre dans un système conforme à l'une quelconque des revendications 1 à 8, ce procédé comportant les étapes suivantes :
- l'acquisition (160), par le lecteur de badges ou le clavier, des droits d'accès d'une personne présente devant une porte d'entrée,
- la détermination (162), par l'unité de commande, si les droits d'accès ainsi acquis satisfont des conditions d'accès pré-enregistrées, ces conditions d'accès pré-enregistrées comportant une première condition d'accès qui permet d'identifier des droits d'accès autorisés à déclencher le déplacement de la serrure électronique de son état verrouillé vers son état déverrouillé sans faire intervenir le terminal distant, et
- si ces droits d'accès acquis satisfont ces conditions d'accès pré-enregistrées, en réponse, commander (164) automatiquement le déplacement de la serrure électronique de son état verrouillé vers son état déverrouillé sans faire intervenir le terminal distant, **caractérisé en ce que** :
- les conditions d'accès pré-enregistrées comportent une seconde condition d'accès qui limite la plage horaire à l'intérieur de laquelle des droits d'accès autorisés peuvent être utilisés pour déclencher le déplacement de la serrure électronique de son état verrouillé vers son état déverrouillé sans faire intervenir le terminal distant, et
- si les droits d'accès acquis par le lecteur de badges ou le clavier satisfont la première condition d'accès et ne satisfont pas la seconde condition d'accès, en réponse, déclencher automatiquement l'établissement de la communication audiophonique avec le terminal distant, et
- si les droits d'accès acquis par le lecteur de badges ou le clavier ne satisfont pas la première condition d'accès, en réponse, inhiber le déclenchement automatiquement de l'établissement de la communication audiophonique avec le terminal distant.

## Patentansprüche

1. Zugangskontrollsystem mit:
- eine Eingangstür (4) am Eingang eines Raums, wobei diese Eingangstür zwischen einer geschlossenen Position, in der sie den Zugang zum Inneren dieses Raums verhindert, und einer offenen Position, in der sie den Zugang zum Inneren dieses Raums ermöglicht, beweglich ist,
- eine elektronische Zugangskontrollvorrichtung, die fest mit der Eingangstür oder dem Türrahmen der Eingangstür verbunden ist, wobei diese elektronische Zugangskontrollvorrichtung umfasst:
- ein elektronisches Schloss, das sich als Reaktion auf den Empfang eines Entriegelungsbefehls bewegen kann:
- aus einem verriegelten Zustand, in dem es die Eingangstür in einer geschlossenen Position verriegelt, in
- einen entriegelten Zustand, in dem die Eingangstür frei aus ihrer geschlossenen Position in eine geöffnete Position bewegt werden kann,
- einen Zugangsberechtigungsleser (40), der die Zugangsberechtigungen einer vor der Eingangstür anwesenden Person erfassen kann, wobei dieser Leser (40) für Zugangsrechte ein Ausweisleser ist, der die in einem Ausweis gespeicherten Zugangsrechte nur dann erfassen kann, wenn sich dieser Ausweis weniger als 10 m vom Ausweisleser entfernt befindet, oder eine Tastatur, über die die vor der Tür anwesende Person einen Zugangscode eingeben kann, und
- eine externe Gegensprechanlage (42), die eine Audioverbindung herstellen kann, über die der Entriegelungsbefehl an das elektronische Schloss gesendet werden kann, wobei diese externe Gegensprechanlage zu diesem Zweck ein Mikrofon (62) und einen Lautsprecher (64) umfasst,
- ein Fernterminal (6), das in der Lage ist, mit der externen Gegensprechanlage über ein Fernkommunikationsnetz eine Audioverbindung herzustellen, wobei dieses Fernterminal zu diesem Zweck eine Fernsprechanlage (20) mit einem Mikrofon (26) umfasst, einen Lautsprecher (28) und eine Entriegelungstaste (40) umfasst, die bei Betätigung durch einen Benutzer des Fernterminals die Entriegelungsbefehlsübertragung an das elektronische Schloss über das Fernkommunikationsnetz auslöst,
- eine Steuereinheit (110), die so konfiguriert ist, dass sie die folgenden Vorgänge ausführt:
- Feststellen, ob die vom Leser (40) erworbenen Zugangsrechte vorab gespeicherte Zugangsbedingungen erfüllen, wobei diese vorab gespeicherten Zugangsbedingungen eine erste Zugangsbedingung umfassen, die es ermöglicht, Zugangsrechte zu identifizieren, die berechtigt sind, die Umstellung des elektronischen Schlosses von seinem verriegelten Zustand in seinen entriegelten Zustand auszulösen, ohne das Fernterminal zu betätigen, und
- wenn diese erworbenen Zugangsrechte diese vorab gespeicherten Zugangsbedingungen erfüllen, als Reaktion darauf automatisch die Bewegung des elektronischen Schlosses von seinem verriegelten Zustand in seinen entriegelten Zustand steuern, ohne das Fernterminal zu betätigen,
**dadurch gekennzeichnet, dass**:
- die vorab gespeicherten Zugangsbedingungen eine zweite Zugangsbedingung umfassen, die den Zeitbereich begrenzt, innerhalb dessen autorisierte Zugangsrechte verwendet werden können, um die Umstellung des elektronischen Schlosses von seinem verriegelten Zustand in seinen entriegelten Zustand auszulösen, ohne das Fernterminal zu betätigen, und
- die Steuereinheit (110) auch so konfiguriert ist, dass sie die folgenden Vorgänge ausführt:
- wenn die vom Ausweisleser oder der Tastatur erworbenen Zugangsrechte die erste Zugangsbedingung erfüllen und die zweite Zugangsbedingung nicht erfüllen, als Reaktion darauf automatisch die Herstellung der Audiokommunikation mit dem Fernterminal auslösen, und
- wenn die vom Ausweisleser oder der Tastatur erworbenen Zugangsrechte die erste Zugangsbedingung nicht erfüllen, wird als Reaktion darauf die automatische Auslösung der Herstellung der Audiokommunikation mit dem entfernten Terminal gesperrt.

2. System nach Anspruch 1, wobei:
- die externe Gegensprechanlage (42) eine Kamera (60) umfasst,
- das Fernterminal einen Bildschirm (22) umfasst und
- die mit dem entfernten Endgerät hergestellte Kommunikation als Reaktion auf die Erfassung von Zugangsrechten durch den Leser, die die Zugangsbedingungen nicht erfüllen, eine Videokommunikation ist, bei der die von der Kamera (60) der Außen-Sprechanlage auf dem Bildschirm des Fernterminals angezeigt werden und während der der Entriegelungsbefehl an das elektronische Schloss gesendet werden kann.

3. System nach einem der vorstehenden Ansprüche, wobei die Außenausrüstung (42) eine Ruftaste (66) aufweist, die automatisch die Herstellung der Audiokommunikation mit dem entfernten Endgerät auslöst, wenn sie von der vor der Eingangstür anwesenden Person betätigt wird.

4. System nach einem der vorstehenden Ansprüche, wobei das elektronische Schloss eine elektronische Türblende (44) ist, die an einer Innenseite (9) der Tür befestigt ist, und diese elektronische Türblende in Form eines einzigen Teils vorliegt, das alle folgenden Komponenten umfasst:
- mindestens einen Riegel (74), der zwischen einer ausgefahrenen Position, in der er mit einer fest mit dem Türrahmen verbundenen Aufnahme zusammenwirkt, um diese Tür in ihrer geschlossenen Position zu verriegeln, und einer eingefahrenen Position, in der er die Bewegung der Tür von ihrer geschlossenen Position in ihre geöffnete Position ermöglicht, beweglich ist,
- die Steuereinheit (110),
- eine Öffnungstaste (120), die von einer Person im Inneren des Raums betätigt werden kann, um die Bewegung des mindestens einen Riegels aus seiner ausgefahrenen Position in seine eingezogene Position auszulösen, und
- die Verbindungen zwischen allen Komponenten der elektronischen Türblende.

5. System gemäß den Ansprüchen 2 und 4 zusammen, wobei:
- die elektronische Türblende zusätzlich die folgende Komponente umfasst: einen Innenbildschirm (78), der die von der Kamera der Außenanlage (42) der Gegensprechanlage aufgenommenen Bilder anzeigen kann, und
- die Steuereinheit (110) auch so konfiguriert ist, dass sie den folgenden Vorgang ausführt: Wenn die vom Lesegerät erworbenen Zugangsrechte nicht den vorab gespeicherten Zugangsbedingungen entsprechen, wird als Reaktion darauf automatisch die Anzeige der von der Kamera (60) der Außen-Sprechanlage aufgenommenen Bilder auf dem Innenbildschirm ausgelöst.

6. System nach Anspruch 5, wobei:
- Die elektronische Türblende umfasst zusätzlich folgende Komponente: eine Innenausstattung (130) für die Gegensprechanlage mit: einem Mikrofon (132), einem Lautsprecher (134), eine von einer Person auf der Innenseite der Tür bedienbare Gesprächstaste (136) und den Innenbildschirm (78), der die von der Kamera (60) der Außen-Sprechanlage aufgenommenen Bilder anzeigen kann, und
- die Steuereinheit (110) so konfiguriert ist, dass sie als Reaktion auf die Betätigung der Dialogtaste (136) eine Videotelefonie-Verbindung zwischen einer Person auf der Außenseite der Tür und einer Person im Inneren des Raums über die Außen- (42) und Innen- (130) Gegensprechanlage herstellt.

7. System nach einem der Ansprüche 4 bis 6, wobei die Türblende mehrere der genannten Riegel (74) aufweist, die zwischen einer ausgefahrenen Position und einer eingefahrenen Position beweglich sind.

8. System nach einem der vorstehenden Ansprüche, wobei der Zugangsberechtigungsleser (40) ein Ausweisleser ist, der die in einem Ausweis gespeicherten Zugangsberechtigungen nur dann erfassen kann, wenn sich dieser Ausweis weniger als 1 m vom Ausweisleser entfernt befindet.

9. Elektronische Türleiste zur Realisierung eines Systems gemäß einem der Ansprüche 4 bis 7, wobei diese elektronische Türleiste an einer Innenseite der Tür befestigt werden kann und diese elektronische Türleiste in Form eines einzigen Teils vorliegt, das alle folgenden Komponenten umfasst:
- mindestens einen Riegel (74), der zwischen einer ausgefahrenen Position, in der er mit einer fest mit dem Türrahmen verbundenen Aufnahme zusammenwirkt, um diese Tür in ihrer geschlossenen Position zu verriegeln, und einer eingefahrenen Position, in der er die Bewegung der Tür von ihrer geschlossenen Position in ihre geöffnete Position ermöglicht, verschoben werden kann,
- eine Steuereinheit (110), die so konfiguriert ist, dass sie die folgenden Vorgänge ausführt:
- Feststellen, ob die vom Ausweisleser oder der Tastatur erworbenen Zugangsrechte den vorab gespeicherten Zugangsbedingungen entsprechen, wobei diese vorab gespeicherten Zugangsbedingungen eine erste Zugangsbedingung umfassen, die es ermöglicht, Zugangsrechte zu identifizieren, die berechtigt sind, die Bewegung des mindestens einen Riegels aus seiner ausgefahrenen Position in seine eingefahrene Position auszulösen, ohne das Fernterminal zu betätigen, und
- wenn diese erworbenen Zugangsrechte diese vorab gespeicherten Zugangsbedingungen erfüllen, als Reaktion darauf automatisch die Bewegung des mindestens einen Riegels aus seiner ausgefahrenen Position in seine eingefahrene Position zu steuern,
- eine Öffnungstaste (120), die von einer Person im Inneren des Raums betätigt werden kann, um die Bewegung des mindestens einen Riegels aus seiner ausgefahrenen Position in seine eingefahrene Position auszulösen, und
- die Verbindungen zwischen allen Komponenten der elektronischen Türblende,
**dadurch gekennzeichnet, dass**:
- die vorab gespeicherten Zugangsbedingungen eine zweite Zugangsbedingung umfassen, die den Zeitbereich begrenzt, innerhalb dessen autorisierte Zugangsrechte verwendet werden können, um die Bewegung des mindestens einen Riegels aus seiner ausgefahrenen Position in seine eingefahrene Position auszulösen, ohne das Fernterminal zu betätigen, und
- die Steuereinheit (110) auch so konfiguriert ist, dass sie die folgenden Vorgänge ausführt:
- wenn die vom Ausweisleser oder der Tastatur erworbenen Zugangsrechte die erste Zugangsbedingung erfüllen und die zweite Zugangsbedingung nicht erfüllen, als Reaktion darauf automatisch die Herstellung der Audiokommunikation mit dem entfernten Terminal auslösen, und
- wenn die vom Ausweisleser oder der Tastatur erworbenen Zugangsrechte die erste Zugangsbedingung nicht erfüllen, wird als Reaktion darauf die automatische Auslösung der Herstellung der Audiokommunikation mit dem entfernten Terminal unterbunden.

10. Verfahren zur Zugangskontrolle, das in einem System gemäß einem der Ansprüche 1 bis 8 implementiert ist, wobei dieses Verfahren die folgenden Schritte umfasst:
- Erfassen (160) der Zugangsrechte einer vor einer Eingangstür anwesenden Person durch den Ausweisleser oder die Tastatur,
- Feststellen (162) durch die Steuereinheit, ob die so erfassten Zugangsrechte vorab gespeicherte Zugangsbedingungen erfüllen, wobei diese vorab gespeicherten Zugangsbedingungen eine erste Zugangsbedingung umfassen, die es ermöglicht, Zugangsrechte zu identifizieren, die berechtigt sind, die Bewegung des elektronischen Schlosses von seinem verriegelten Zustand in seinen entriegelten Zustand auszulösen, ohne das entfernte Endgerät zu betätigen, und
- wenn diese erworbenen Zugangsrechte diese vorab gespeicherten Zugangsbedingungen erfüllen, als Reaktion darauf automatisches Steuern (164) der Bewegung des elektronischen Schlosses von seinem verriegelten Zustand in seinen entriegelten Zustand, ohne das Fernterminal zu betätigen,
**dadurch gekennzeichnet, dass**:
- die vorab gespeicherten Zugangsbedingungen eine zweite Zugangsbedingung umfassen, die den Zeitbereich begrenzt, innerhalb dessen autorisierte Zugangsrechte verwendet werden können, um die Umstellung des elektronischen Schlosses von seinem verriegelten Zustand in seinen entriegelten Zustand auszulösen, ohne das Fernterminal zu betätigen, und
- wenn die vom Ausweisleser oder der Tastatur erworbenen Zugangsrechte die erste Zugangsbedingung erfüllen und die zweite Zugangsbedingung nicht erfüllen, als Reaktion darauf automatisch die Herstellung der Audiokommunikation mit dem entfernten Terminal auslöst, und
- wenn die vom Ausweisleser oder der Tastatur erworbenen Zugangsrechte die erste Zugangsbedingung nicht erfüllen, als Reaktion darauf das automatische Auslösen der Herstellung der Audiokommunikation mit dem Fernterminal zu unterbinden.

## Claims

1. Access control system comprising:
- an entrance door (4) located at the entrance to a room, this entrance door being movable between a closed position where it prevents access to the interior of this room and an open position where it allows access to the interior of this room,
- an electronic access control device integral with the entrance door or the door frame, this electronic access control device comprising:
- an electronic lock capable of moving, in response to receiving an unlock command,
- from a locked state in which it locks the entrance door in a closed position, to
- an unlocked state in which the entrance door can be freely moved from its closed position to an open position,
- an access rights reader (40) capable of acquiring the access rights of a person present in front of the entrance door, this access rights reader (40) being a badge reader capable of acquiring the access rights recorded in a badge only when this badge is located less than 10 m from the badge reader, or a keypad that allows the person present in front of the door to enter an access code, and
- external intercom equipment (42) capable of establishing audio communication during which the unlock command can be sent to the electronic lock, this external intercom equipment comprising a microphone (62) and a loudspeaker (64) for this purpose,
- a remote terminal (6) capable of establishing, with the external intercom equipment, audio communication via a long-distance telecommunications network, this remote terminal comprising for this purpose remote intercom equipment (20) comprising a microphone (26), a loudspeaker (28) and an unlock button (40) capable, when pressed by a user of the remote terminal, of triggering the sending of the unlock command to the electronic lock via the long-distance telecommunications network,
- a control unit (110) configured to perform the following operations:
- determining whether the access rights acquired by the reader (40) satisfy pre-registered access conditions, these pre-registered access conditions including a first access condition that identifies access rights authorised to trigger the movement of the electronic lock from its locked state to its unlocked state without involving the remote terminal, and
- if these acquired access rights satisfy these pre-registered access conditions, automatically commanding the electronic lock to move from its locked state to its unlocked state without involving the remote terminal,
**characterised in that**:
- the pre-registered access conditions include a second access condition that limits the time range within which authorised access rights can be used to trigger the movement of the electronic lock from its locked state to its unlocked state without involving the remote terminal, and
- the control unit (110) is also configured to perform the following operations:
- if the access rights acquired by the badge reader or keypad satisfy the first access condition and do not satisfy the second access condition, in response, automatically trigger the establishment of audio-visual communication with the remote terminal, and
- if the access rights acquired by the badge reader or keypad do not satisfy the first access condition, in response, automatically inhibit the initiation of audio-visual communication with the remote terminal.

2. System according to claim 1, wherein:
- the external intercom equipment (42) includes a camera (60),
- the remote terminal includes a screen (22), and
- the communication established with the remote terminal in response to the reader acquiring access rights that do not satisfy the access conditions is a videophone communication during which the images filmed by the camera (60) of the external intercom equipment are displayed on the screen of the remote terminal and during which the unlock command can be sent to the electronic lock.

3. System according to any of the preceding claims, in which the external equipment (42) comprises a call button (66), this call button automatically triggering the establishment of audio communication with the remote terminal when it is pressed by the person present at the entrance door.

4. System according to any of the preceding claims, in which the electronic lock is an electronic door panel (44) fixed to an inner face (9) of the door, and this electronic door panel is in the form of a single piece comprising all of the following components:
- at least one bolt (74) movable between an extended position in which it cooperates with a housing integral with the door frame to lock the door in its closed position, and a retracted position in which it allows the door to move from its closed position to its open position,
- the control unit (110),
- an opening button (120) that can be pressed by a person inside the room to trigger the movement of said at least one bolt from its extended position to its retracted position, and
- the connections between all the components of the electronic door panel.

5. System according to claims 2 and 4 taken together, in which:
- the electronic door panel further comprises the following component: an internal screen ( 78) capable of displaying images filmed by the camera of the external intercom equipment (42), and
- the control unit (110) is also configured to perform the following operation: if the access rights acquired by the reader do not satisfy the pre-registered access conditions, in response, automatically trigger the display of images filmed by the camera (60) of the external intercom equipment on the internal screen.

6. System according to claim 5, wherein:
- the electronic door panel also includes the following component: an internal intercom system (130) comprising: a microphone (132), a loudspeaker (134), a dialogue button (136) accessible to a person located on the inside of the door, and an internal screen (78) capable of displaying images filmed by the camera (60) of the external intercom equipment, and
- the control unit (110) is configured to establish a video call between a person located on the outside of the door and a person located inside the premises via the external (42) and internal (130) intercom equipment in response to the dialogue button (136) being pressed.

7. System according to any of claims 4 to 6, wherein the door frame comprises a plurality of said bolts (74) movable between an extended position and a retracted position.

8. System according to any of the preceding claims, wherein the access rights reader (40) is a badge reader capable of acquiring the access rights recorded in a badge only when that badge is located less than 1 m from the badge reader.

9. Electronic door strip for implementing a system according to any of claims 4 to 7, wherein this electronic door strip is capable of being fixed to an inner face of the door and this electronic door strip is in the form of a single piece comprising all of the following components:
- at least one bolt (74) movable between an extended position in which it cooperates with a housing integral with the door frame to lock the door in its closed position, and a retracted position in which it allows the door to move from its closed position to its open position,
- a control unit (110) configured to perform the following operations:
- determining whether the access rights acquired by the badge reader or keypad satisfy pre-registered access conditions, these pre-registered access conditions including a first access condition that identifies access rights authorised to trigger the movement of said at least one bolt from its extended position to its retracted position without involving the remote terminal, and
- if these acquired access rights satisfy these pre-recorded access conditions, automatically controlling the movement of said at least one bolt from its extended position to its retracted position in response,
- an opening button (120) capable of being activated by a person located inside the premises to trigger the movement of said at least one bolt from its extended position to its retracted position, and
- the connections between all the components of the electronic door panel,
**characterised in that**:
- the pre-registered access conditions include a second access condition which limits the time period within which authorised access rights may be used to trigger the movement of said at least one bolt from its extended position to its retracted position without involving the remote terminal, and
- the control unit (110) is also configured to perform the following operations:
- if the access rights acquired by the badge reader or keypad satisfy the first access condition and do not satisfy the second access condition, in response, automatically trigger the establishment of audio communication with the remote terminal, and
- if the access rights acquired by the badge reader or keypad do not satisfy the first access condition, in response, automatically inhibit the initiation of audio-visual communication with the remote terminal.

10. Access control method implemented in a system according to any of claims 1 to 8, this method comprising the following steps:
- acquisition (160), by the badge reader or keypad, of the access rights of a person present at an entrance door,
- determining (162), by the control unit, whether the access rights thus acquired satisfy pre-recorded access conditions, these pre-recorded access conditions including a first access condition that allows authorised access rights to be identified in order to trigger the movement of the electronic lock from its locked state to its unlocked state without involving the remote terminal, and
- if these acquired access rights satisfy these pre-registered access conditions, in response, automatically controlling (164) the movement of the electronic lock from its locked state to its unlocked state without involving the remote terminal,
**characterised in that**:
- the pre-registered access conditions include a second access condition that limits the time range within which authorised access rights can be used to trigger the movement of the electronic lock from its locked state to its unlocked state without involving the remote terminal, and
- if the access rights acquired by the badge reader or keypad satisfy the first access condition and do not satisfy the second access condition, in response, automatically trigger the establishment of audio communication with the remote terminal, and
- if the access rights acquired by the badge reader or keypad do not satisfy the first access condition, in response, automatically inhibit the triggering of the establishment of audio-visual communication with the remote terminal.
